# Europäisches Patentamt
# European Patent Office
# Office européen des brevets

(11) Veröffentlichungsnummer: **0 228 480**
**B1**

(12) **EUROPÄISCHE PATENTSCHRIFT**

(45) Veröffentlichungstag der Patentschrift:
16.05.90

(51) Int. Cl.⁵: **G06F 11/34**, G06F 11/00

(21) Anmeldenummer: **85116652.0**

(22) Anmeldetag: **30.12.85**

(54) Verfahren und Einrichtung zur Analyse von Steuerprogrammen.

(43) Veröffentlichungstag der Anmeldung:
**15.07.87 Patentblatt 87/29**

(45) Bekanntmachung des Hinweises auf die Patenterteilung:
**16.05.90 Patentblatt 90/20**

(84) Benannte Vertragsstaaten:
**DE FR GB IT**

(56) Entgegenhaltungen:
**US-A- 3 427 443**
**US-A- 4 485 440**

**ELECTRONIC DESIGN, Band 33, Nr. 22, 19. September 1985, Seiten 117-120,122,124,126,130,131, Hasbrouck Heights, N.J., US; B. ABLEIDINGER et al.: "Real-time analyzer furnishes high-level look at software operation"**
**IBM TECHNICAL DISCLOSURE BULLETIN, Band 22, Nr. 7, Dezember 1979, Seiten 2651-2654, New York, US; W.J. BROWN et al.: "Circuit for tracing branch instructions"**

(73) Patentinhaber: **IBM DEUTSCHLAND GMBH, Pascalstrasse 100, D-7000 Stuttgart 80(DE)**

(84) Benannte Vertragsstaaten: **DE**

(73) Patentinhaber: **International Business Machines Corporation, Old Orchard Road, Armonk, N.Y. 10504(US)**

(84) Benannte Vertragsstaaten: **FR GB IT**

(72) Erfinder: **Horsch, Axel, Dipl.-Ing. (FH), Emmendinger Strasse 33, D-7030 Böblingen(DE)**

(74) Vertreter: **Jost, Ottokarl, Dipl.-Ing., Schönaicher Strasse 220, D-7030 Böblingen(DE)**

**Beschreibung**

Die Erfindung betrifft ein Verfahren und eine Einrichtung zur Analyse von Steuerprogrammen für elektronische Datenverarbeitungsanlagen.

Eine Feststellung, ob ein Anwenderprogramm oder in der darunterliegenden Programmebene einer Datenverarbeitungsanlage deren Steuerprogramm einen bestimmten Verlauf genommen hat, erfolgt meist durch Abdeckungsmessungen, die sich auf reine Instruktions-/Verzweigungsaufzeichnungen des tatsächlichen Programmablaufs abstützen. Abdeckungsmessungen der Instruktionspfade und Umschaltungen von Programmstatuswörtern (PSW's) sowie Umschaltungen infolge von erzwungenen Unterbrechungen durch asynchrone Vorgänge (Traps) werden bisher mit Hilfe von Programmablauf- Verfolgungsmethoden (Trace-Methoden) durchgeführt, die jedoch einerseits durch die Speicherkapazität der Trace-Einheit eine Begrenzung erfahren, andererseits aber in der Ermittlung der ausgeführten Instruktionspfade sehr zeitaufwendig sind, da die Programmaufzeichnungen stets gegen komplexe Programm-Modelle verglichen werden müssen.

Progammtests wie sie heute durchgeführt werden, erfordern sehr viel Systemzeit um die erforderlichen und verfügbaren Prüfprogramme und Systemsteuerprogramme ablaufen zu lassen. Probleme, die während dieser Prüfaktivitäten festgestellt werden, werden aufgezeichnet, behoben und erneut durch spezifische Prüfläufe verifiziert.

Dieses Vorgehen ist jedoch mit drei größeren Nachteilen behaftet:

1. Der Abdeckungsgrad aller Prüfprogramme und Systemsteuerprogramme (SCP) (System im Sinne von Datenverarbeitungsanlage) ist hinsichtlich Funktionsspezifikation bzw. Maschinenarchitektur nicht bekannt (Black Box Aspekt).

2. Der Abdeckungsgrad aller Prüfprogramme und Systemsteuerprogramme ist hinsichtlich der Mikrocode-Abdeckung (White Box Aspekt) ebenfalls nicht bekannt.

3. Der Pufferspeicher für die Aufzeichnung des Programmablaufs (Trace-Puffer) hat nur eine begrenzte Kapazität und muß daher von Zeit zu Zeit in einen anderen (Hintergrund-) Speicher umgeladen werden, wodurch Lücken in der Aufzeichnung des Programmablaufs entstehen und somit Abdeckungsmessungen nur auf statischer Basis vorgenommen werden können.

Die Folge dieser vorstehend genannten Nachteile ist, daß der verantwortliche Prüfkoordinator für ein zu untersuchendes neues Datenverarbeitungssystem, vor Beginn der eigentlichen Testperiode, gezwungen ist, alle in der ganzen Welt verfügbaren Prüfprogramme zusammenzutragen und auf der Testmaschine ablaufen zu lassen. Dieses ist, wie bereits angedeutet wurde, nur notwendig, weil der Abdeckungsgrad des betreffenden Programms nicht bekannt ist und daher aus Verläßlichkeitsgründen so viele Prüfprogramme gefahren werden müssen, wie möglich.

Wenn Feldprobleme berichtet werden, zeigt sich im allgemeinen, daß ein Fehler vorher nicht gefunden werden konnte, weil die verfügbaren Testprogramme die fehlerhafte Funktion nicht abdeckten. Das entsprechende Testprogramm wird dann zwar um diese Funktion erweitert wie viele andere Funktionen nun aber immer noch nicht abgedeckt sind, bleibt weiterhin unbekannt. Dieser gegenwärtige Zustand ist unbefriedigend, vor allem bei solchen Anwendungen, die eine sehr hohe Verfügbarkeit eines Datenverarbeitungssystems verlangen.

Aus ELECTRONIC DESIGN, Band 33, Nr. 22, Seiten 117–131, ist eine Einrichtung zur Softwareanalyse bekannt, die in Realzeit feststellt, ob ein Anwendungsprogramm einen bestimmten Verlauf genommen hat. Die Instruktionsadressen des zu testenden Programms werden während des Programmablaufs aus dem Speicher abgerufen, relevante Adressen in einem FIFO-Speicher abgespeichert und mit Hilfe eines Datenreduktionsprozessors weiter verarbeitet.

Es ist daher die Aufgabe der vorliegenden Erfindung, ein Verfahren und eine Einrichtung für die Abdeckungsanalyse von Anwendungs- und Systemsteuerprogrammen anzugeben, das eine umfassende Analyse mit äußerst wirtschaftlichen Mitteln erlaubt.

Gelöst wird diese Aufgabe der Erfindung durch die in den Ansprüchen 1 und 4 angegebenen Merkmale. Vorteilhafte Ausgestaltungen und Weiterbildungen der Erfindungen sind den jeweiligen Unteransprüchen zu entnehmen.

Durch die Erfindung wird somit der Vorteil erreicht, daß das Verfahren und die Einrichtung zur Analyse von Programmen den Grad der Codeabdeckung des zu untersuchenden Programms während spezifizierter Testphasen mißt. Die grundlegende Idee hierbei ist eine Korrelation und ein Vergleich von Resultaten die von statischen und dynamischen Analyseaufzeichnungen gewonnen werden. Wesentlich ist hierbei die weiterentwickelte Definition der Komplexität der Programme, basierend auf McCabe's Theorie der Programmflußkomplexität von Anwenderprogrammen. Die Einführung eines statischen und dynamischen Instruktionsflußindikators sowie ein Verfahren zur Bestimmung der Testabdeckungsresultate durch Korrelation der Angaben des statischen und dynamischen Instruktionsflußindikators, sind hierbei eine wesent- Vorraussetzung.

Die Erfindung weist gegenüber den bekannten Verfahren und Anordnungen folgende weitere Vorteile auf:

1. Zeitgünstige Ermittlung der statischen Ergebnisse,
2. schnelle Ermittlung der Abdeckungsergebnisse,
3. Instruktionspfad-Aufzeichnungen (mit Hilfe der Mappingmethode durch den Instruktionsflußindikator) in Echtzeit,
4. keine Kapazitätsprobleme hinsichtlich Zeit, Speichergröße, Informationsmenge während der dynamischen Untersuchung nach derMapping Methode (die keine statistische Messungen vornimmt und eine 100 % Abdeckungsmessung garantiert),
5. die dynamische Aufzeichnung benötigt nur die Adressleitungen des Microprogrammspeichers, in dem das zu untersuchende Systemsteuerprogramm resident ist, (Instruktionscode oder andere Signale sind nicht erforderlich),
6. Ermittlung von vier unterschiedlichen Abdeckungsergebnissen mit nur einem Testkonzept,
7. einfache Verknüpfung einzelner Abdeckungsergebnisse von verschiedenen Programmläufen zu einem Gesamtergebnis,
8. übersichtliche und klare Darstellung von nicht ausgeführten Instruktionen und Instruktionspfaden nicht ausgeführter Verzweigungen und nicht vorgekommener Programmeingänge (-Einsprünge) und
9. Darstellung der aufgetretenen Trap-/Programmstatuswort(PSW-Umschaltungen).

Im folgenden wird die Erfindung anhand der Figuren erläutert. Es zeigen:

Fig.1 und 2 Prinzipdarstellungen zur Erläuterung der McCabe Theorie der Programmkomplexität,
Fig. 3 und 4 Darstellungen von Graphen zur Erläuterung der Grundlagen der Erfindung,
Fig. 5 einen Abschnitt eines Steuerprogramms, das zur Erläuterung eines Ausführungsbeispiels verwendet wird,
Fig. 6 bis 9 die zu dem Steuerprogrammabschnitt nach Fig. 5 gehörenden Instruktionsflußindikator-Muster,
Fig. 10 und 13 Darstellungen der Adressbeziehungen einer Mikroinstruktion,
Fig. 11 ein Blockschaltbild eines dynamischen Instruktionsflußindikators und
Fig. 12 ein Impuls-/Zeitdiagramm der Arbeitsabläufe in der Schaltungsanordnung nach Fig. 11.

McCabe's Theorie, die in dem Aufsatz "A complexity measure", veröffentlicht in IEEE Transactions On Software Engineering, Vol. Se-2, No. 4, December 1976, pages 308-320, beschrieben ist, wird zunächst soweit sie für die vorliegende Erfindung in Betracht kommt, im folgenden näher beschrieben.

Die Theorie der Programmkomplexität nach J. McCabe beruht auf der Ermittlung der zyklomatischen Zahl aus einer graphischen Darstellung (im folgenden Graph genannt) des Programmablaufs. Die Komplexität eines Programms, die aus der zyklomatischen Zahl ermittelt wird, ist aus Elementen aufgebaut, die Verzweigungen verursachen. Funktionen selbst erhöhen die Komplexität oder den Grad der Komplexität nicht. Dieses bedeutet, daß alle sequentiellen Instruktionen, zwischen Ablaufsteuerinstruktionen gelegen, von der Betrachtung ausgeschlossen sind und nur Verzweigungs- und Sammelinstruktionen berücksichtigt werden. Diese werden im Graph als ein kleiner Kreis dargestellt, der mit Knoten bezeichnet wird. Die möglichen Pfade von einem Knoten zu einem anderen sind als Pfeile dargestellt. Ein solchermaßen gezeichneter Programmablauf wird als Ablaufgraph (bzw. Steuergraph) bezeichnet.

Im folgenden gelten die nachstehenden Bezeichnungen und Definitionen:

| Bezeichnungen: | Graph | $--G$ |
| --- | --- | --- |
| | Pfeile | $--e$ |
| | Knoten | $--n$ |
| | zyklomatische Zahl | $--V(G)$ |

Definition 1: Die zyklomatische Zahl eines Programms mit einfachem Eingangs- und Ausgangsknoten ergibt sich nach McCabe durch die Formel
$V(G) = e-n+2$ (1)

Theorem 1: In einem strikt verbundenen Graphen G ist die zyklomtische Zahl $V(G)$ die maximale Anzahl der linear unabhängigen Pfade.

Theorem 2: Jeder Pfad durch den Graphen G kann ausgedrückt werden als lineare Kombination des Satzes linear unabhängiger Pfade.

Die Berechnung der zyklomatischen Zahl nach Formel (1) erfordert, daß alle Knoten gezählt und alle Pfeile aufgefunden und gezählt werden. Dieses wird dadurch erreicht, daß zuerst ein Ablaufgraph von dem zu untersuchenden Programm erstellt wird, wodurch eine Anzahl von Problemen/Anomalien erzeugt und deshalb in seiner Benutzung unzweckmäßig ist.

Die folgende Lösung scheint dagegen leichter realisieren zu sein, allerdings mit der Einschränkung, daß sie nur für Graphen mit je einem Eingangs- und Ausgangsknoten verwendbar ist. Es gelten dann folgende Bezeichnungen und Definitionen:

3

| Graph | — — G |
|---|---|
| Verzweigungsknoten (Abfragekasten) | — — b |
| Sammelknoten | — — c |
| Pfeile | — — e |
| Knoten | — — n |
| zyklomatische Zahl | — — V (G) |

**Theorem 3:** Die Zahl der Pfeile ergibt sich zu:

$e = 1 + 3b$

**Theorem 4:** Für jeden Verzweigungsknoten gibt es auch einen Sammelknoten. Somit ergibt sich die Zahl der Knoten zu:

$n = b + c + 2 = 2b + 2$

**Theorem 5:** Die zyklomatische Zahl V des Graphen G:

$V(G) = e - n + 2 = (1 + 3b) - (2b + 2) + 2 = b + 1$

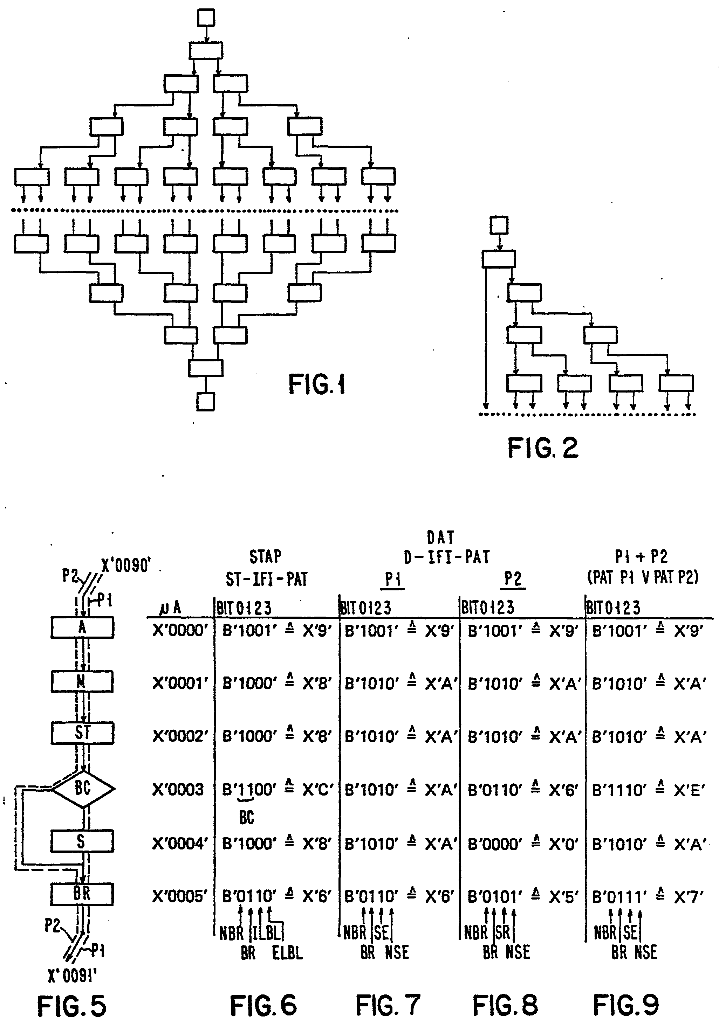

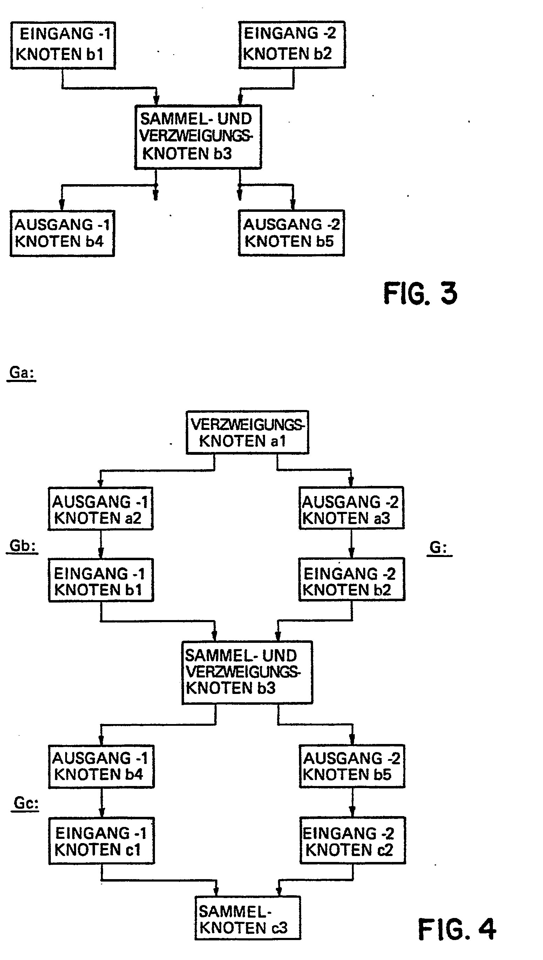

Ein Graph, in dem die korrekte Anzahl von Pfeilen für die Errechnung der zyklomatischen Zahl direkt abgelesen werden kann, muß somit mit den elementaren Verzweigungs- und Sammelknoten gezeichnet werden. Dieses bedeutet, daß ein elementarer Verzweigungsknoten auch drei Pfeile aufweist: ein Pfeil der auf den Knoten zeigt und zwei Pfeile die vom Knoten weg zeigen. Ein elementarer Sammelknoten besteht ebenfalls aus drei Pfeilen: zwei Pfeilen die auf den Knoten zeigen und ein Pfeil der vom Knoten weg zeigt. Fig. 1 zeigt einen entsprechenden Entscheidungsbaum unter Berücksichtigung des Theorems 3.

Betrachtet man die obere Hälfte des Baumes, so läßt sich folgendes feststellen:

Summe der Verzweigungsknoten: $b = 1 + 2 + 4 + 8 = 15$

Summe der Pfeile: $p1 = 1 + 2 + 4 + 8 = 15$

Untere Hälfte des Baumes:

Summe der Sammelknoten: $c = 8 + 4 + 2 + 1 = 15$

Summe der Pfeile: $p2 = 8 + 4 + 2 + 1 = 15$

Baummitte:

Pfeile: $p3 = b + 1 = 15 + 1 = 16$

Die Zahl der offenen Pfeile eines Baumes mit b Verzweigungen ist $b + 1$. In einem vollständigen symetrischen Baum ist die Anzahl der Pfeile die in eine Linie münden gleich der doppelten Anzahl von Verzweigungen in diese Linie usw.

Die Gesamtsumme der Pfeile ist folgende:

$p = p1 + p3 + p2 = 15 + 16 + 15 = 46$

$p = b + (b + 1) + c = 15 + (15 + 1) + 15 = 46$

mit $b = c$

$p = 3b + 1 = 3 \times 15 + 1 = 46$

Fig. 2 zeigt nun einen anderen Entscheidungsbaum, der einen allgemeineren Aufbau aufweist. Es handelt sich hierbei um einen unvollständigen Baum mit b Verzweigungen, bei dem die Zahl der offenen Pfeile ebenfalls, wie im vorhergehenden Beispiel, $b + 1$ ist:

$p3 = b + 1 = 8 + 1 = 9$

Theorem 3 ist also allgemein anwendbar auf Graphen mit einem Eingangsknoten, da die Formel für die Zählung offener Pfeile den Fall unvollständiger Entscheidungsbäume mit einschließt. Jeder Graph mit einem einfachen Eingangsknoten kann als ein solcher Entscheidungsbaum dargestellt werden.

Im Theorem 5 ist zu erkennen, daß nur die Zahl der Verzweigungsknoten eine Rolle spielt. Dieses bedeutet, daß nur solche Instruktionen zur Bestimmung der zyklomatischen Zahl eines Mikroprogramms erfaßt werden müssen, die Verzweigungen verursachen. Mikroprogramme, die im allgemeinen unstrukturiert sind, verfügen oft über mehr als einen Eingangsknoten und über mehrere Ausgangsknoten. Die oben angegebenen Formeln berücksichtigen diese Tatsache jedoch noch nicht.

Das vorstehend angegebene Ergebnis: $p3 = b + 1$ ist in sofern bemerkenswert, als es bereits selbst gleich der zyklomatischen Zahl ist. Es läßt sich daraus die Schlußfolgerung für einen beliebigen Graphen mit Einfacheingangsknoten, der in einen solchen Entscheidungsbaum umgeformt wurde, ableiten:

Die zyklomatische Zahl, die gleich der Anzahl der linear unabhängigen Pfade ist, ist die Zahl der Pfade, die an der breitesten Stelle des Programmablaufgraphen gezählt wird. Diese Betrachtungsweise über das Zustandekommen der zyklomatischen Zahl ist von McCabe noch nicht beschrieben worden.

Da Mikroprogramme, wie oben bereits erwähnt wurde, im allgemeinen nicht hinsichtlich des Raums und der Durchlaufleistung strukturiert und optimiert sind, haben sie oft mehrfach Eingangs- und/oder Ausgangsknoten. Die im folgenden dargestellte Theorie trägt dieser Tatsache Rechnung und gibt eine mathematische Lösung an. Zunächst sei ein Graph mit zwei Eingangs- und zwei Ausgangsknoten betrachtet, wie er in Fig. 3 dargestellt ist. Die aus diesem Graphen Gb resultierenden linear unabhängigen Pfade zeigt die folgende Tabelle 1.

Tabelle 1

Linear unabhängige Pfade:

| Pfad | Knoten | | | | |
|---|---|---|---|---|---|
| | b1 | b2 | b3 | b4 | b5 |
| 1 | * | | * | * | |
| 2 | * | | * | | * |
| 3 | | * | * | | * |

Der vierte mögliche Pfad (der sich von b2 über b3 nach b4 erstreckt) ist kein linear unabhängiger Pfad (nach 1, 2, 3). Dieser Pfad kann mit Hilfe der folgenden linearen Gleichung konstruiert werden: Pfad 4 = Pfad 1 + Pfad 3 - Pfad 2 (vgl. Tabelle 2).

Tabelle 2

| Pfad | Knoten | | | | |
|---|---|---|---|---|---|
| | b1 | b2 | b3 | b4 | b5 |
| 1 | 1 | | 1 | 1 | |
| −2 | 1 | | 1 | | 1 |
| 3 | | 1 | 1 | | 1 |
| Summe | | | | | |
| 4 | 0 | 1 | 1 | 1 | 0 |

Im Graphen Gb ist die Zahl der linear unabhängigen Pfade gleich 3, so daß die Komplexität des Programms gleich der zyklomatischen Zahl ist:
$V(Gb) = 3$

Um einen solchen Graphen aber wieder in Übereinstimmung mit den Erfordernissen der Graphentheorie mit einem Eingangs- und einem Ausgangsknoten zu bringen, sind zwei zusätzliche Graphen (Ga und Gc) erforderlich, die zu dem Graphen Gb hinzugefügt werden müssen um einen neuen Graphen G zu erhalten, der den erwähnten Bedingungen genügt. Wie Fig. 4 in diesem Zusammenhang zeigt erzeugt der Graph Ga einen Eingangsknoten, während der Graph Gc einen Ausgangsknoten erzeugt.

Tabelle 3 gibt Auskunft über die linear unabhängigen Pfade des Graphen G.

Tabelle 3

| Pfad | Knoten | | | | | | | | | | |
|---|---|---|---|---|---|---|---|---|---|---|---|
| | a1 | a2 | a3 | b1 | b2 | b3 | b4 | b5 | c1 | c2 | c3 |
| 1 | * | * | | * | | * | * | | * | | * |
| 2 | * | * | | * | | * | | * | | * | * |
| 3 | * | | * | | * | * | | * | | * | * |

In diesem Graphen sind wieder drei unabhängige Pfade vorhanden, so daß auch hier die zyklomatische Zahl $V(G) = 3$ ist.

Der Graph G ist nun ein solcher mit einem Einfacheingangs-und Ausgangsknoten. Es gilt für ihn die vereinfachte Formel (2):
Zyklomatische Zahl $V(G) = b + 1 = 2 + 1 = 3$

Dieses ist die gleiche zyklomatische Zahl, die auch für den einfachen Graphen Gb gefunden wurde.

Für eine vereinfachte Berechnung für umliegende Graphen kann folgender Ansatz dienen:

Linear unabhängige Pfade des Graphen Ga: (Tabelle 4)

Tabelle 4

| Pfad | Knoten | | |
|------|--------|------|------|
|      | a1 | a2 | a3 |
| 1 | * | * | |
| 2 | * | | * |

Der Graph Ga weist zwei unabhängige Pfade auf, so daß dessen zyklomatische Zahl V (Ga) = 2 ist. Die Zahl der Verzweigungsknoten ist b = 1.

Wendet man die vereinfachte Formel (2) auf den Graphen Ga an, so ergibt sich eine zyklomatische Zahl V (GA) = b + 1 = 2. Dieser Wert ist gleich dem vorhergehenden Resultat. Das bedeutet aber, daß mehrere Ausgänge (Mehrfachausgangsknoten) die zyklomatische Zahl des Graphen nicht erhöhen, so daß die vereinfachte Formel (2) auch auf Graphen mit mehreren Ausgängen angewendet werden kann. Betrachtet man die graphische Darstellung, so ist dieses verständlich, weil die Komplexität mehrerer Ausgänge in den Verzweigungsknoten des Graphen enthalten ist.

Die linear unabhängigen Pfade des Graphen Gc zeigt Tabelle 5.

Tabelle 5

| Pfad | Knoten | | |
|------|--------|------|------|
|      | c1 | c2 | c3 |
| 1 | * | | * |
| 2 | | * | * |

Der Graph Gc enthält zwei linear unabhängige Pfade, so daß die zyklomatische Zahl V (Gc) = 2 ist. Die Zahl der Verzweigungsknoten ist b = 0.

Wendet man wieder die vereinfachte Formel (2) auf den Graphen Gc an, so ergibt dieses eine zyklomatische Zahl V (Gc) = 0 + 1 = 1.

Dieses Ergebnis ist aber offensichtlich falsch. Wenn man aber zu diesem Ergebnis die Zahl der zusätzlichen Eingänge hinzuzählt, ergibt sich ein richtiger Wert. Hieraus ist die Wirkung des "+1" in der vereinfachten Formel (2) zu erkennen. Die "1" repräsentiert nämlich einen einzelnen Eingang und muß für n Eingänge auf n geändert werden.

Diese Modifikation wird beim vorliegenden Verfahren und der zugehörigen Einrichtung als neue Definition für die Komplexität unstrukturierter Mikroprogramme verwendet.

Für allgemeine Graphen kann dann eine einfachere Berechnungsmethode gefunden werden. Zunächst mögen folgende Bezeichnungen gelten:

| | |
|---|---|
| Graph | $--G$ |
| Verzweigungsknoten | $--b$ |
| Eingabeknoten | $--y$ |
| zyklomatische Zahl | $--V (G)$ |

<u>Theorem 6:</u>

Die zyklomatische Zahl V (Gi) des Graphen Gi mit Mehrfacheingangs- und ausgangsknoten ist:

$$V (Gi) = b + y \quad (3)$$

Wenn man Mikroprogramme näher untersucht, kann man sehen, daß ein Programm-Modul nicht nur aus einer Routine besteht. Sehr oft werden mehrere Routinen oder Subroutinen mit vollständig verschiedenen Funktionen zusammen in einen Modul gebracht. Es ist somit vorteilhaft, die Programmkomplexität nicht nur auf Modul - sondern auch auf Routinenebene zu bestimmen.

Das im folgenden beschriebene Verfahren unterscheidet sich ebenfalls von McCabes Vorschlag für die Behandlung von Subroutinen innerhalb eines Programms. In McCabes Vorschlag wird zur Komplexität des Programms für jede Subroutine ein Wert +1 hinzugefügt (verbundene Komponenten: "p"-Wert). Das nachstehend beschriebene Verfahren geht diesen Weg nicht; es betrachtet den Aufruf einer Subroutine als eine unbedingte Verzweigung, welche die Komplexität nicht erhöht. Das neue Verfahren bestimmt die Komplexität für einen Mikroprogramm-Modul vielmehr nur auf einer Ebene, führt die Bestimmung jedoch für alle Programmroutinen eines Programm-Moduls, ebenso wie für den Programm-Modul selbst durch.

Das vorhergehende Beispiel ist auch für diese Aufgabe hilfreich. In einem ersten Versuch die zyklomatische Zahl für eine Gruppe von Graphen zu entwickeln, wird die Summe der einzelzyklomatischen Zahlen folgendermaßen aufgebaut:

$V(G) = V(Ga) + V(Gb) + V(Gc) = 2 + 3 + 2 = 7$

Diese Art der Bildung der zyklomatischen Zahl ist offensichtlich nicht korrekt, da die zyklomatische Zahl des vollständigen Graphen für einen einzigen Eingang und einen Ausgangsknoten errechnet wurde.

Zur Ermittlung der korrekten zyklomatischen Zahl für eine allgemeine Gruppe von Graphen wird Formel (3), angepaßt an den jeweiligen Fall, verwendet. Hierzu ist ein Aufsummieren der Verzweigungsknoten der Gruppe und die Addition der Summe der Eingänge der Gruppe, die nicht intern von den Ausgängen der gleichen Gruppe verwendet wird, erforderlich.

Es werden wieder folgende Bezeichnungen gewählt:

| | |
|---|---|
| Gruppe von Graphen | $-- G$ |
| Einzelgraph i | $-- Gi$ |
| Verzweigungsknoten | $-- b$ |
| Eingangsknoten des Graphen i | $-- yi$ |
| Eingangsknoten der Gruppe | $-- y-$ |
| Anzahl der Graphen | $-- k$ |
| zyklomatische Zahl | $-- V(G)$ |

<u>Theorem 7:</u> Die zyklomatische Zahl $V(G)$ der Gruppe von Graphen mit nicht notwendigerweise Einzel- und Ausgangsknoten ist aus folgender Beziehung zu ermitteln:

$V(G) = b + y - (4)$

oder mit $V(Gi)$, abgeleitet nach Formel (3) ergibt sich die zyklomatische Zahl zu

$$V(G) = \sum_{i=1}^{k} V(Gi) - \sum_{i=1}^{k} yi + y^- \qquad (5)$$

Hierauf basierend ist es die Aufgabe eines statischen Analyseprogramms (STAP), einem Steuerprogramm-Tester mittels weniger aber grundlegender Daten mitzuteilen, wie komplex bezüglich seiner Struktur ein vorgegebener Bereich eines Steuerprogramms ist. Basierend auf der Theorie der zyklomatischen Zahlen ist hier ein praktisches Verfahren entstanden, mit dessen Hilfe jedes strukturierte oder unstrukturierte Programm oder Teile derselben analysiert werden können. Eine zyklomatische Zahl, die gemäß Formel (4) oder (5) errechnet wurde, bezieht sich strikt auf die Quantität linear unabhängiger Pfade in dem untersuchten Programm oder Programmabschnitt.

Zu Beginn wurde erwähnt, daß das Prüfsystem im wesentlichen aus drei Teilen besteht, nämlich erstens dem statistischen Analyseprogramm STAP, zweitens dem dynamischen Analysewerkzeug DAT und drittens dem Analyseberichtsprogramm AREP.

Die Aufgabe des statischen Analyseprogramms STAP ist die Erzeugung folgender Daten für einen Steuerprogrammmodul oder eine Steuerprogrammroutine auf der Basis ihrer Befehlsauflistung, und Steuerprogramm-Anweisungen (z.B. LABEL):

- Komplexitätswerte (Anzahl der bedingten Verzweigungen plus Programmeingänge)
- Anzahl und Ort der bedingten Verzweigungen
- Anzahl und Ort der Programmeingänge
- Statistische Daten hinsichtlich Anzahl und Typ der Verzweigungsinstruktionen
- statischer Instruktionsflußindikator-Plan des Steuerprogramms.

Von besonderer Bedeutung ist die Erzeugung des soeben erwähnten statischen Instruktionsflußindikator-Plans der untersuchten Steuerprogrammroutine oder des untersuchten Steuerprogramm-Moduls, welcher dem Analyseberichtsprogramm AREP gestattet, die Codeabdeckung in Relation zu den Ergebnissen des dynamischen Analysewerkzeugs DAT zu bestimmen.

Für die Berechnung der zyklomatischen Zahl und für die Erzeugung eines Instruktionsflußindikatorplanes eines Steuerprogramms muß man wissen, ob die betrachtete Instruktion ein Abfrageknoten, ein funktioneller Knoten oder ein Sammelknoten ist, bzw. ob es sich um eine unbedingte, bedingte oder keine Verzweigungsinstruktion handelt. Steuerprogramme weisen oft sehr mächtige Instruktionen, wie Mehrfachverzweigungen auf eine getestete Bedindung auf in der Art von "im Falle von N führe aus". Alle diese Instruktionen müssen klassifiziert werden. Die untenstehende Tabelle 6 zeigt eine solche Klassifizierung am Beispiel des IBM 4361 Kanalprozessors.

Tabelle 6

| Klasse | Mnemonisch | Abfrageknoten | Wert b | Erklärung |
|--------|-----------|---------------|--------|-----------|
| Bedingt | BC | ja | 1 | Verzweige auf Bedingung |
| | BB | ja | 1 | Verzweige auf Bit |
| | BP | ja | 1 | Verzweige auf Muster |
| | CCU | ja | 1 | Bedingte Umschaltung auf Steuersp. 1 |
| | CCD | ja | 1 | Bedingte Umschaltung auf Steuersp. 2 |
| | BBC | ja | 2 | Ccw Kommando |
| | BCF VSE | ja | 6 | Ccw Kennzeichen |
| | BCF 370 | ja | 6 | Ccw Kennzeichen |
| | BNW4 | ja | 14 | n-fach Verzweigung (15fach) |
| | BNW8 | ja | 254 | n-fach Verzweigung (255fach) |
| Unbedingt | B | nein | 0 | Verzweigung |
| | BLB | nein | 0 | Verzweigung |
| | BI | nein | 0 | Verzweigung Indirekt |
| | LEAVE | nein | 0 | Rücksprung |
| | LASS | nein | 0 | Rücksprung u. Austausch des Zustandes |
| | BAL | nein | 0 | Verzweige und verbinde |
| | BLSS | nein | 0 | Verzweige u. verbinde Zustandsaustausch |
| | CU | nein | 0 | Umschaltung auf Steuersp. 1 |
| | CD | nein | 0 | Umschaltung auf Steuersp. 2 |
| Keine Verzweigung | NOP | nein | 0 | Keine Operation |
| | NBR | nein | 0 | keine Verzweigung |
| Funktion | Beliebig | nein | 0 | |

Zur Angabe der Instruktionstype teilt das statische Analyseprogramm STAP jeder Instruktion einen ein Digit umfassenden statischen Instruktionsflußindikator IFI zu. Dieser statische Instruktionsflußindikator zeigt für jede Instruktionsadresse die Instruktionstype und ob dieser ein externer Eingang zugeteilt ist. Mit Hilfe des statischen Instruktionsflußindikators IFI und des mit Hilfe des dynamischen Analysewerkzeugs DAT erzeugten Instruktionsflußindikators ist es möglich die Abdeckung hinsichtlich des Instruktionscode, der Verzweigungen und der Instruktionspfade zu bestimmen. Hierbei macht der statische Instruktionsflußindikator von der in der nachstehenden Tabelle 7 aufgeführten Codierung der Instruktionstypen Gebrauch.

| IFI Digit | Instruktionstype |
|-----------|------------------|
| 0 | Keine Instruktion gefunden |
| 8 | Keine Verzweigungsinstruktion |
| 4 | Unbedingte Verzweigungsinstruktion |
| C | Bedingte Verzweigungsinstruktion |
| 9 | Keine Verzweigungsinstruktion mit Modul / Unterprogramm Eingang |
| 5 | Unbedingte Verzweigungsinstruktion mit Modul / Unterprogramm Eingang |
| D | Bedingte Verzweigungsinstruktion mit Modul / Unterprogramm Eingang |
| E | Mehrfachverzweigungsinstruktion |
| F | Mehrfachverzweigungsinstruktion mit Modul / Unterprogramm Eingang |
| 6 | NOP Instruktion |

Im folgenden soll eine Gegenüberstellung einer Mustererzeugung nach einem statischen und einem dynamischen Analyseverfahren mithilfe der statischen Instruktionsflußindikatormuster und der dynamischen Instruktionsflußindikatormuster Unterschiede aufzeigen, die bei der Bewertung eines Steuerprogrammablaufs oder eines Teiles deselben auftreten können.

Fig. 5 zeigt einen kleinen Ausschnitt einer Steuerbefehlsfolge, die im Steuerspeicher von einer Adresse X'0090' erreicht wird und zu einer Adresse X'0091' weiterführt. Das als Beispiel gewählte Steuerprogrammstück besteht aus einer Additionsmikroinstruktion (A) mit der Steuerspeicheradresse X'000', einer Verschiebe-Mikroinstruktion (M) mit der Steuerspeicheradresse X'0001', einer Speichermikroinstruktion (ST) mit der Steuerspeicheradresse X'0002', einer bedingten Verzweigungsmikroinstruktion (BC) mit der Steuerspeicheradresse X'0003', ferner einer Subtraktionsmikroinstruktion (S) mit der Steuerspeicheradresse X'0004' und schließlich einer Verzweigungsmikroinstruktion (BR) mit der zugehörigen Steuerspeicheradresse X'0005'. (Die Schreibweise X'0005' steht für hexadezimal '5').

Das diesem Programmabschnitt zugeordnete statische Instruktionsflußindikatormuster ST-IFI-PAT, das in Fig. 6 dargestellt ist, wird maschinell mit Hilfe des statischen Analyseprogramms STAP aus dem zugehörigen Abschnitt der Programmliste gewonnen; es handelt sich hierbei um Daten die nach der zuvor erläuterten Theorie von McCabe Aufschluß über den Abdeckungsgrad hinsichtlich der Codeabdeckung und Verzweigungsabdeckung von zu testenden Programmen geben. Fig. 13 zeigt eine schematische Darstellung in welcher Weise die in einer Programmliste 34 enthaltene Information einer einzelnen Mikroinstruktion vom statischen Analyseprogramm Stap aufbereitet wird:

Zunächst steht der Auswertung zur Verfügung die Adresse 3 der Mikroinstruktion ($\mu$-A) 2. Außerdem werden die Mikroinstruktionen daraufhin untersucht, ob sie sequentielle (SE) oder nichtsequentielle (NSE) Mikroinstruktionen sind. Für die nichtsequentiellen Mikroinstruktionen ist es von Interesse, ob sie aufgrund eines internen Eingangs(Einsprungs) aus dem gleichen, im Augenblick untersuchten, Steuerprogrammteil oder -Modul, also von einem internen Label 38 (ILBL) oder aus einem externen Steuerprogrammabschnitt oder -Modul, d.h. von einem externen Label 37 (ELBL) erreicht werden. Diese Information ist nach der vorher beschriebenen und auf McCabe basierenden Theorie für die Bestimmung der Programmabdeckung eine essentielle Information. Eine Datenverarbeitungsanlage, auf der das statische Analyseprogramm STAP läuft, ermittelt für jede Mikroinstruktion ferner ob sie eine Verzweigungsinstruktion 36 (BR) oder keine Verzweigungsinstruktion 35 (NBR) ist. Die Zuordnung der Bitpositionen im statischen Informationsflußindikatormuster, geht ebenfalls aus Fig. 13 hervor. Handelt es sich bei der gerade betrachteten Mikroinstruktion $\mu$I um keine Verzweigungsinstruktion NBR, dann wird Bit 0 auf eins gesetzt. Ist diese Mikroinstruktion dagegen eine Verzweigungsinstruktion BR, dann wird Bit 1 auf 1 gesetzt.

Eine weitere Besonderheit des statischen Instruktionsflußindikators ST-IFI zeigt ebenfalls Fig. 13. Der statische Analyseprogramm untersucht nämlich ferner noch ob es sich bei einer Verzweigungsinstruktion um eine bedingte Verzweigungsinstruktion BC handelt. Ist dieses der Fall, dann werden die Bitstellen 0 und 1 beide auf 1 gesetzt.

Wird die Instruktion vom betrachteten Steuerprogrammteil erreicht (ILBL), dann wird Bit 2 auf 1 gesetzt. Wenn die betrachtete Mikroinstruktion von einem anderen Steuerprogramm-Modul oder einem anderen Steuerprogrammabschnitt erreicht wird (ELBL), dann wird Bit 3 auf 1 gesetzt.

Betrachtet man die Fig. 5 und 6 gemeinsam, dann ist festzustellen, daß das erzeugte statische Instruktionsflußindikatormuster ST-IFI-PAT in Fig. 6 keine Auskunft geben kann, ob der in Fig. 5 dargestellte Steuerprogrammabschnitt längs des Pfades P1 oder längs des Pfades P2 durchlaufen wird.

Generell kann festgestellt werden, daß ein statisches Analyseprogramm den tatsächlichen Verlauf, den ein Steuerprogramm bei einem Testlauf genommen hat, nicht untersuchen kann. Dieses ist dem dynamischen Analysewerkzeug DAT vorbehalten, das für jeden untersuchten Abschnitt oder Modul eines Steuerprogramms die tatsächlich durchlaufenden Pfade, im Fall der Fig. 5, 7, 8, den Pfad P1 oder P2 angibt.

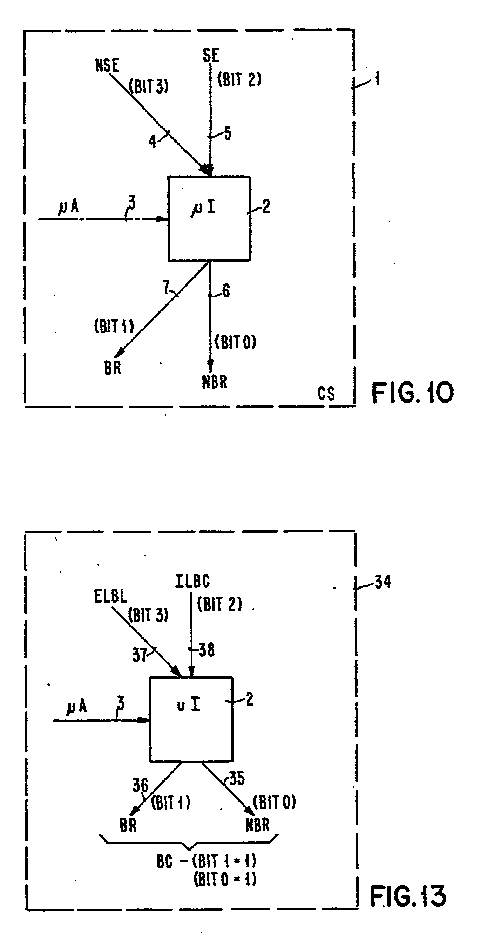

Zur Erläuterung des dynamischen Instruktionsflußindikatormusters D-IFI-PAT dient Fig. 10, die sich von Fig. 13 nur sehr wenig unterscheidet. Für eine Mikroinstruktion ($\mu$I)2, die im Steuerspeicher 1 gespeichert ist, wird wieder ihre Mikroinstruktionsadresse ($\mu$-A)3 untersucht und dabei festgestellt, ob sie eine sequentielle (SE)5 oder nichtsequentielle (NSE)4 Mikroinstruktion ist. Sequentielle Mikroinstruktionen sind beispielsweise im Pfad P1 in Fig. 5 die Mikroinstruktionen BC, S, BR, die einander unmittelbar nachfolgen. Im Pfad P2 dagegen ist die Mikroinstruktion BR eine nichtsequentielle, da sie nicht der Mikroinstruktion S unmittelbar nachfolgt sonderen von einer in Ablaufrichtung früheren Mikroinstruktion BC erreicht wird. Eine sequentielle Mikroinstruktion unterscheidet sich von ihrer Vorgänger-Mikroinstruktion dadurch, daß ihre Adresse um den Wert 1 größer ist. Bei nicht sequentiellen Mikroinstruktionen ist dieser Wert Wert $\neq 1$, vorausgesetzt, daß diese Mikroinstruktionen alle eine solche Länge haben, daß sie in eine Speicherstelle des Steuerspeichers passen, die von einer Adresse angesteuert wird. Ist dieses nicht der Fall, dann gelten andere Kriterien zur Feststellung ob eine Mikroinstruktion eine sequentielle ist oder nicht. Bei einer sequentiellen Instruktion SE wird Bit 2 auf 1 und bei einer nichtsequentiellen Mikroinstruktion NSE wird Bit 3 auf 1 gesetzt.

Ferner wird die Mikroinstruktion daraufhin untersucht, ob sie eine Verzweigungsinstruktion (BR) 7 oder keine Verzweigungsinstruktion (NBR)6 ist. Fig. 10 zeigt ebenfalls die Bedeutung der Bitpositionen im dynamischen Instruktionsflußindikatormuster D-IFI-PAT. Handelt es sich um keine Verzweigungsinstruktion NBR so wird Bit 0 auf 1 gesetzt, handelt es sich dagegen um eine Verzweigungsinstruktion BR dann wird Bit 1 auf 1 gesetzt.

Die Bitpositionen spiegeln sich in den Fig. 6 bis 9 in denen die jeweiligen dynamischen Instruktionsflußindikatormuster dargestellt sind, wieder.

Verfolgt man zunächst den Pfad P1 (längs der strichpunktierten Linie) dann haben alle Mikroinstruktionen dieses betrachteten Abschnitts eine sequentielle Instruktionsadressefolge und zwar von X'000' bis X'0005'. Diese Mikroinstruktionsadressen beziehen sich auf den Steuerspeicher (CS)1. Das in Fig. 6 zu diesem Steuerprogrammabschnitt gehörende statische Instruktionsflußindikatormuster ST-IFI-PAT erzeugt für jede Mikroinstruktion dieses Abschnitts das aus den Bits 0 bis 3 gehörende Muster. Die erste Mikroinstruktion mit der Adresse X'0000', eine Mikroinstruktion, deren Operationscode sie als eine Additionsmikroinstruktion (A) kennzeichnet, hat eine Bitkonfiguration bei der das Bit 0 auf 1 gesetzt ist, weil es sich um keine Verzweigungsinstruktion (NBR) handelt, ein auf 0 gesetztes Bit 1 weil sie keine Verzweigungsinstruktion (BR) ist, ein auf 0 gesetztes Bit 2, weil sie nicht von einem Adresseneinsprung aus dem gleichen Steuerprogrammabschnitt erreicht wird und ein auf 1 gesetztes Bit 3, weil sie von einer Adresse außerhalb des betrachteten Steuerprogrammabschnitts (ELBL), im vorliegenden Falle der Adresse X'0090' einer bei der statischen Analyse noch unbekannten Adresse, erreicht wird. Es ergibt sich somit ein binäres Bitmuster B'1001', das in Hexadezimaldarstellung der Zahl 9 entspricht. (Die Schreibweise B'1001' steht für binäär '1001').

Das entsprechende dynamische Instruktionsflußindikatormuster D-IFI-PAT hat für die Pfade P1 und P2 die gleiche Representation, wie die Fig. 7 und 8 erkennen lassen.

Die nächste Mikroinstruktion des betrachteten Steuerprogrammabschnitts hat die Adresse X'0001' und einen Operationscode der einer Move-Instruktion (M) entspricht. Das zugehörige statische Instruktionsflußindikatormuster in Fig. 6 zeigt das binäre Muster "1000", das in Hexadezimaldarstellung der 8 entspricht. Dieses Muster ist entstanden aufgrund des Operationscodes dieser Mikroinstruktion der keiner Verzweigungsinstruktion (NBR) entspricht, so daß Bit 0 auf 1 und Bit 1 auf 0 gesetzt ist. Da diese Instruktion auch nicht aufgrund eines internen (ILBL) oder externen Einsprungs (ELBL) erreicht wurde, sind auch die Bits 2 und 3 des statischen Instruktionsflußindikatormusters auf 0 gesetzt.

Das zugehörige dynamische Instruktionsflußindikatormuster ist für beide Pfade P1 und P2 das gleiche, da sich die beiden Pfade an dieser Stelle nicht voneinander unterscheiden.

Ähnliches gilt auch für die nächste Mikroinstruktion in Fig. 5 mit der Adresse X'0002', eine Speicher-Mikroinstruktion, welche die gleichen Instruktionsflußindikatormuster ergibt.

Die nächste Mikroinstruktion in Fig. 5, eine bedingte Verzweigungsinstruktion (BC) mit der Adresse X'0003' führt zu einem statischen Instruktionsflußindikatormuster '1100', entsprechend hexadezimal 'C'. Bits 0 und 1 sind, entsprechend der Darstellung in Fig. 13, beide auf 1 gesetzt, um anzugeben, daß es sich bei dieser Mikroinstruktion um eine bedingte Verzweigungsinstruktion handelt. Da sie durch keinen internen (ILBL) oder externen (ELBL) LABEL erreicht werden kann, sind die Bits 2 und 3 des Musters auf 0 gesetzt (vgl. Fig. 6).

Bei der Betrachtung des dynamischen Instruktionsflußindikatormusters für den Pfad 1 wird angenommen, daß die Bedingung, die eine Verzweigung des Steuerprogramms an dieser Stelle erfordern würde, noch nicht erfüllt ist. Somit hat eine Verzweigung nicht stattgefunden (NBR), und Bit 0 des dynamischen Instrukttionsflußindikatormusters ist auf 1 gesetzt. Gleichzeitig ist Bit 1 auf 0 gesetzt, weil eine Verzweigung (BR) nicht stattfand. Diese beiden Signale müssen sich also gegenseitig ausschließen. Da ferner der Adressenverlauf sequentiell ist, ist auch Bit 2 auf 1 und Bit 3 auf 0 gesetzt.

Anders sieht das dynamische Instruktionsflußindikatormuster für den Pfad P2 aus, für den angenommen wird, daß die Bedingung für die Durchführung der Verzweigung bereits erfüllt ist. Die bedingte Verzweigungsinstruktion mit der Adresse X('0003' enthält oder führt zu einer Information, welche die Adresse der nächsten auszuführenden Mikroinstruktion, in unserem Falle X'0005' angibt. Aus dieser Tatsache ist abzuleiten, daß es sich um eine durchzuführende Verzweigung handelt, weshalb Bit 0 auf 0 und Bit 1 auf 1 gesetzt ist. Da es sich ferner um eine sequentielle Adresse (SE) handelt, ist auch Bit 2 auf 1 und Bit 3 auf 0 gesetzt. Das so entstandene binäre Muster '0110' entspricht dem Hexadezimalwert '6'.

Die folgende Instruktion im betrachteten Steuerprogrammabschnitt in Fig. 5, eine Schiebeinstruktion (S) mit der hexadezimalen Adresse '0004' ist keine Verzeigungsinstruktion, so daß im statischen Instruktionsflußindikatormuster Bitposition 0 auf 1 und Bitposition 1 auf 0 gesetzt ist. Da es sich auch bei dieser Mikroinstruktion um eine sequentielle handelt, sind auch die Bitpositionen 2 und 3 auf 0 gesetzt, so daß sich ein binäres Muster '1000', entsprechend hexadezimal '8' ergibt.

Das dynamische Instruktionsflußindikatormuster für diese Mikroinstruktion, die nur auf dem Pfad P1 erreicht wird, entspricht im wesentlichen denjenigen der schon vorher erläuterten Mikroinstruktionen M und ST.

Wenn man nun den Pfad P2 betrachtet, dann wird diese Schiebemikroinstruktion (S) nicht erreicht, was sich im dynamischen Instruktionsflußindikatormuster sowohl in der binären als auch in der hexadezimalen Darstellung als Wert 0 äußert, wie Fig. 8 in der zweiten Zeile von unten zeigt ('0000' bzw. '0').

Die letzte Mikroinstruktion des betrachteten Steuerprogrammabschnitts ist eine Verzweigungsinstruktion (BR) mit der Adresse X'0005'. Das statische Instruktionsflußindikatormuster in Fig. 6 zeigt

EP 0 228 480 B1

deshalb in der Bitposition 0 des Musters eine 0, in Bitposition 1 eine 1, ebenso auch in der Bitposition 2, da diese Mikroinstruktion von einem internen Label ILBL erreicht wird. Bitposition 3 ist, da kein externer LABEL ELBL (Einsprung) vorliegt eine 0. In Hexadezimaldarstellung ergibt dieses Muster den Wert '6'.

Völlig identisch sind sowohl die binären, als auch die hexadezimalen Muster, die vom statischen Analyseprogramm und vom dynamischen Analysewerkzeug für den Pfad P1 erzeugt wurden, wie ein Vergleich der Fig. 6 und 7 zeigt. Das dynamische Instruktionsflußindikatormuster für den Pfad 2 muß jedoch anders sein, da die gerade betrachtete Verzweigungsinstruktion BR längs des Pfades P2 über eine nichtsequentielle Adresse, nämlich über die Adresse X'0003' und nicht X'0004' erreicht wurde. Das erzeugte dynamische Instruktionsflußindikatormuster für den Pfad 2 hat daher die Binärdarstellung B-0101-, was einem hexadezimalen Wert '5' entspricht. Fig. 8 zeigt an den Stellen der binären 1 im dynamischen Instruktionsflußindikatormuster, also an den Bitstellen 1 und 3, daß es sich um eine Verzweigungsinstruktion (BR) sowie um eine nichtsequentiell von der vorhergehenden Mikroinstruktion erreichte Mikroinstruktion handelt. Der zu dieser Binärdarstellung gehörende äquivalente Hexadezimalwert ist '5'.

Fig. 9 zeigt das dynamische Instruktionsflußindikatormuster für den Fall, daß das Steuerprogramm sowohl den Pfad P1, als auch den Pfad P2 genommen hat. Die Muster ergeben sich aus der Oder-Verknüpfung der entsprechenden dynamischen Instruktionsflußindikatormuster für den Pfad P1 und P2 (vgl. Fig. 7 und 8).

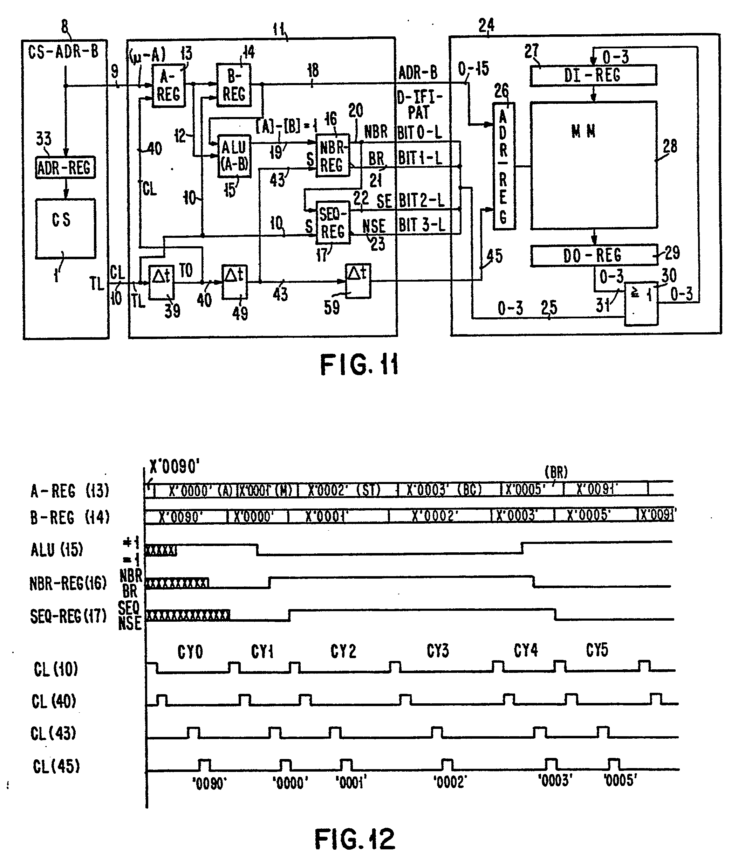

Eine Einrichtung, die nun in der Lage ist, die dynamischen Instruktionflußindikatormuster zu erzeugen und in einem Protokollspeicher zur späteren Auswertung abzulegen, zeigt Fig. 11. In Verbindung mit dem Signal-/Zeitdiagramm in Fig. 12 wird im folgenden ein typischer Betriebsablauf dieser Einrichtung beschrieben.

Das aus der Einheit 11 für die Erzeugung des dynamischen Instruktionsflußindikatormusters und der Einheit 24 für die Protokollierung des Programmverlaufs bestehende dynamische Analysewerkzeug DAT ist im wesentlichen über die Leitung 9 mit dem Steuerspeicheradressenbus CS-ADR-B und 10 mit einer Taktleitung CL des Prüflings 8 verbunden, einer elektronischen Datenverarbeitungsanlage, deren Steuerspeicher (CS)1 und Adressenregister (ADR-REG) 33 dargestellt sind. Die Mikroinstruktionsadressen µ-A gelangen über den Steuerspeicheradressenbus in das Adreßregister 33, wo sie jeweils aus dem Steuerspeicher 1 eine Mikroinstruktion abrufen. Sie gelangen aber auch über die parallel geschaltete Leitung 9 in ein A-Register (A-REG) 13 und, verschoben um einen Mikroinstruktionszyklus, in ein B-Register (B-REG) 14. Die beiden Register 13 und 14 stellen Eingangsregister für eine arithmetische und logische Einheit (ALU) 15 dar, die ausschließlich eine Subtraktion ausführt und zwar Inhalt Register 13 minus Inhalt Register 14.

Wenn es sich bei den Inhalten der Register 13 und 14 um sequentielle Mikroinstruktionsadressen handelt, dann enthält das Register 13 immer einen um 1 größeren Wert als das Register 14. Da dieses nicht zutrifft für nichtsequentielle Mikroinstruktionsadressen kann die arithmetische und logische Einheit 15 dazu verwendet werden, eine Unterscheidung zwischen Mikroinstruktionen mit sequentiellen und solchen mit nichtsequentiellen Adressen zu treffen.

Die Ausgangsleitung 19 der arithmetischen und logischen Einheit 15 führt immer dann ein dem Logikpegel der binären 1 entsprechendes Ausgangssignal, wenn die Subtraktion Inhalt A-Register minus Inhalt B-Register 1 ergibt: (A) - (B) = 1, wenn die Mikroinstruktionen des Mikroinstruktionssatzes die gleiche Länge '1' haben, d.h. in eine Speicherplatz des Steuerspeichers passen. Ist dieses nicht der Fall müssen entsprechende Umrechnungen durchgeführt werden.

Dieses Ausgangssignal wird dem Eingang eines Nobranch-Registers (NBR-REG) 16 zugeführt. Ist Register 16 gesetzt, dann erzeugt es auf seiner Ausgangsleitung 20 ein NBR-Signal, das über die Leitung für Bit 0 (Bit 0-L) des dynamischen Instruktionsflußindikatormusters zur Einrichtung 24 für die Protokollierung des Programmablaufs übertragen wird. Die Datenübernahme des Registers 16 erfolgt über die Taktleitung 10, die auch mit dem Satzeingang S dieses Registers verbunden ist.

Das NBR-Signal auf der Ausgangsleitung 20 des Registers 16 wird auch zu dem Eingang eines Registers (SEQ-REG) 17 zur Indikation sequentieller oder nichtsequentieller Mikroinstruktionsadressen übertragen, dessen Setzeingang S ebenfalls mit der Taktleitung 10 verbunden ist.

Das Register 17 übernimmt, um einen Instruktionszyklus verzögert, die im Register 16 enthaltene Information (z.B. das NBR-Bit) und wandelt diese dabei in eine andere um (z.B. in das SE-Bit), das eine sequentiellen Adresse indiziert, und stellt diese auf der Ausgangsleitung 22, entsprechend Bit 2-L, zur Verfügung.

Enthält das Register 16 die Information BR (Verzweigung) die auf der Ausgangsleitung 21, entsprechend Bit 1-L, abgegeben wird, dann erzeugt das Register 17 die Information NSE (nicht sequentiell), die über die Leitung 23, entsprechend Bit 3-L, zur Verfügung gestellt wird.

Liegen also Mikroinstruktionen vor, die keine sequentiellen Adressen haben, also Verzweigungsinstruktionen dann erzeugen die Ausgangleitungen 21 des Registers 16 und 23 des Registers 17 das BR- bzw. das NSE-Signal, das über die Bitleitung 2 (Bit 1-L) bzw. die Bitleitung 3 Bit 3-L zur Einrichtung 24 für die Protokollierung übertragen wird.

Der zeitliche Ablauf der Operationen im dynamischen Instruktionsflußindikator und der angeschlossenen Protokolliereinrichtung wird von den in Figur 12 in den 4 letzten Zeilen dargestellten Taktimpulsreihen CL (10), CL (40), CL (43) und CL (45) gesteuert. Jeweils mit der Vorderflanke eines Impulses der Taktimpulsreihe CL (10) wird die sich gerade im A-Register 13 befindende Mikroinstruktionsadresse, im

11

ersten dargestellten Arbeitszyklus CY0, die Adresse X'0090' in das B-Register 14 übernommen. Die Übernahme der Adresse der nächsten Mikroinstruktion vom Steuerspeicheradressenbus 9 in das A-Register 13 wird von den Impulsen der Taktimpulsreihe CL (40) gesteuert. Die Taktimpulsreihe CL (40) entsteht aus der Taktimpulsreihe CL (10) durch Verzögerung in einer Verzögerungsschaltung ( t) 39. Die Verzögerungszeit der Verzögerungsschaltung 39 ist so bemessen, daß die Adressenübertragung von dem A-Register zu dem B-Register vollständig abgeschlossen ist, bevor das A-Register mit der nächsten Mikroinstruktionsadresse geladen wird.

Der arithmetischen und logischen Einheit (ALU) 15, an deren Eingängen nun die beiden Mikroinstruktionsadressen aus dem A-Register und dem B-Register anliegen, wird genügend Zeit gelassen, ein Resultat zu bilden und dieses an der Ausgangsleitung 19 zur Verfügung zu stellen. Dieses wird technisch durch eine weitere Verzögerungsschaltung (t) 49 realisiert, die an ihrem Ausgang die Impulse der Taktimpulsreihe CL (43) zur Verfügung stellt, mit der die Übernahme des Ergebnisses der arithmetischen und logischen Einheit 15 auf der Leitung 19 durch das NBR-Register 16 gesteuert wird.

Im vorliegenden Beispiel ist nur die arithmetische und logische Einheit 15 in der Lage, im Arbeitszyklus CY0 ein gültiges Ausgangsergebnis zu produzieren, da das NBR-Register 16 und das SEQ-Register 17 aufgrund der zu Beginn der zeitlichen Betrachtung unbekannten Mikroinstruktionsadresse im B-Register, gültige Werte nicht erzeugen können, eine Situation, die in Figur 12 durch einen mit Kreuzen markierten Signalverlauf gekennzeichnet ist. Der erste Impuls der Taktreihe CL (45), der vom ersten Impuls der Taktreihe CL (43) durch Verzögerung in einem weiteren Verzögerungsglied (ΔT) 59 entstanden ist, kann somit unter der im B-Register befindlichen Mikroinstruktionsadresse, die nun in das Adressenregister (ADR-REG 26) der Protokolliereinrichtung 24 übernommen wurde, kein gültiges dynamisches Instruktionsflußindikatormuster über die Leitungen Bit 0-L bis Bit 3-L in den Protokollspeicher (MM)28 übernehmen.

Im Arbeitszyklus CY1 befinden sich, wie Figur 12 zeigt, im A-Register die Adresse X'0001' und im B-Register die Adresse X'0000'. Nach Ablauf ihrer internen Verarbeitungszeit bildet die arithmetische und logische Einheit 15 die Differenz, im vorliegenden Falle also den Wert 1, der über die Leitung 19 in das NBR-Register 16 übertragen wird und dort ein Ausgangssignal auf der Ausgangsleitung 20 erzeugt. Dieses Ausgangssignal NBR gibt an, daß die untersuchte Mikroinstruktion keine Verzweigungsinstruktion ist; Bit 0 des dynamischen Instruktionsflußindikatormusters D-IFI-PAT ist folglich 1. Das von der Taktimpulsreihe des CL (10) gesteuerte SEQ-Register 17 erzeugt zu Beginn des Arbeitszyklus CY1 das Ausgangssignal NSE (die betrachtete Mikroinstruktion ist eine nicht-sequentielle), da am Ende des Arbeitszyklus CY0 das NBR-Register 16 das Ausgangssignal BR (die betrachtete Mikroinstruktion ist eine Verzweigungsinstruktion) erzeugt hatte. Unter der Adresse X'0000' wird somit im Protokollspeicher 28, gesteuert vom zweiten dargestellten Impuls der Taktimpulsreihe CL (43) folgendes dynamisches Instruktionsflußindikatormuster gespeichert: B'1001'.

Die Untersuchung der Mikroinstruktion mit der Adresse X'0000' mit Hilfe des dynamischen Instruktionsflußindikators hat also zu dem Ergebnis geführt, daß es sich bei dieser Mikroinstruktion um keine Verzweigungsinstruktion handelt, die durch einen nicht-sequentiellen Programmeinsprung, beispielsweise von einem anderen Programmmodul erreicht wurde.

Im nächsten Arbeitszyklus CY2 wird die Mikroinstruktion mit der Adresse X'0001', also die nächste des betrachteten Steuerprogrammabschnitts, untersucht. Das A-Register enthält die Adresse X'0002' und das B-Register die Adresse X'0001'. Diese beiden Register, die funktionell die Eingangsregister der arithmetischen und logischen Einheit 15 sind, enthalten Werte, deren Differenz 1 ergibt. Demzufolge wird mit dem dritten Impuls der Taktimpulsreihe CL (43) das Register 16 über seinen Setzeingang S auf den Ausgangswert NBR = 1, und BR = 0 gesetzt. Das Register 17, das zuvor vom dritten Impuls der Taktimpulsreihe CL (10) über den Setzeingang S auf den Ausgangswert SE = 1 und NSE = 0 eingestellt wurde, befindet sich also auch zum Zeitpunkt der Datenübernahme durch die Protokolliereinrichtung 24, d.h. zum Zeitpunkt des dritten Impulses der Taktimpulsreihe CL (45) noch in diesem Signalzustand, so daß nun folgendes dynamisches Instruktionsflußindikatormuster: B'1010' in den Protokollspeicher 28 übertragen wird. Es handelt sich also bei der Mikroinstruktion mit der Adresse X'0001' um eine sequentielle Mikroinstruktion, die keine Verzweigungsinstruktion ist. Sie ist eine sequentielle Mikroinstruktion, weil sich ihre Adresse von der Adresse ihrer Vorgängerinstruktion nur um den Wert + 1 unterscheidet und sie ist auch, wie Figur 12 in der obersten Zeile zeigt, eine Move-Instruktion (M), also keine Verzweigungsinstruktion (NBR).

Die Instruktionsflußindikatormuster für die übrigen, in Figur 12 noch dargestellten Mikroinstruktionen werden in der bereits erläuterten Weise entsprechend gebildet und sie werden in der Protokolliereinrichtung 24 über die Leitung 25, ein ODER-Tor 30, eine Leitung 32 und ein Dateneingangsregister (DI-REG) 27 in einen Protokollspeicher (MM) 28 übertragen und genau an der Stelle innerhalb dieses Speichers gespeichert, die durch die im B-Register 14 befindliche Adresse definiert ist. Diese Adresse wird nämlich nicht nur zur arithmetischen und logischen Einheit 15, sondern auch über eine Leitung 18 zu einem Adressenregister 26 in der Protokolliereinheit 24 übertragen. Der Zeitpunkt der Übernahme wird durch die Signale des Taktes CL (45) definiert, so daß jeweils ein für den betrachteten Arbeitszyklus z.B. CY 2 stabiles Instruktionsflußindikatormuster in den Protokollspeicher gelangen kann.

**Patentansprüche**

1. Verfahren zum Messen des Abdeckungsgrades (Verhältnis der Zahl der ausgeführten Funktionen zur Gesamtzahl der in dem zu testenden Programm enthaltenen Funktionen), wobei Testprogramme die Funktionen der Programme stimulieren und die Instruktionsadressen des zu testenden Programms (Anwendungs- oder Steuerprogramm) zur Interpretation und Exekution in Echtzeit während eines Programmablaufs aus dem Speicher (Haupt- oder Steuerspeicher) abgerufen werden, dadurch gekennzeichnet, daß weiterhin in Echtzeit für jede Instruktion aus ihrer Adresse und der Adresse der Vorgängerinstruktion ein dynamisches Instruktionsflußindikatormuster (D-IFI-PAT) erzeugt wird, das für jede untersuchte Instruktion angibt, ob ihr Verlauf im Programmablauf entsprach:
   a) keine Verzweigungsinstruktion NBR,
   b) eine Verzweigungsinstruktion BR
   c) eine sequentielle Instruktion SE,
   d) eine nicht-sequentielle Instruktion NSE,
daß ferner die erzeugten dynamischen Instruktionsflußindikatormuster in einer Protokolliereinrichtung (24) jeweils unter der Adresse der Instruktion, aus der sie abgeleitet wurden, für einen späteren Vergleich abgelegt wurden,
daß ferner aus den Programmlisten für jede Instruktion aus ihrem Operationscode ein statisches Instruktionsflußindikatormuster (ST-IFI-PAT) erzeugt wird, das für jede Instruktion angibt, ob sie
   a1) keine Verzweigungsinstruktion NBR
   b1) eine Verzweigungsinstruktion BR
   c1) eine Instruktion ist, die von einem internen Einsprung ILB
   d1) eine Instruktion ist, die von einem externen Einsprung ELBL erreicht wird,
   und daß schließlich durch einen instruktionsweisen Vergleich des statischen Instruktionsflußindikatormusters mit dem dynamischen Instruktionsflußindikatormuster über alle Instruktionen des getesteten Programms dessen Abdeckungsgrad bestimmt wird.

2. Verfahren nach Anspruch 1, dadurch gekennzeichnet, daß die Programme modul- bzw. abschnittsweise getestet werden.

3. Verfahren nach Anspruch 1 und/oder 2, dadurch gekennzeichnet, daß die Instruktionsflußindikatormuster (ST-IFI-PAT, D-IFI-PAT) aus 4-Bit Digits bestehen, wobei Bitposition 0 dem NBR-Bit, Bitposition 1 dem BR-Bit, Bitposition 2 dem ILBL- bzw. dem SE-Bit und Bitposition 3 dem ELBL- bzw. NSE-Bit zugeordnet sind.

4. Verfahren nach einem oder mehreren der Ansprüche 1 bis 3, dadurch gekennzeichnet, daß aus der Adresse einer Instruktion und der Adresse ihrer Vorgängerinstruktion durch Differenzbildung festgestellt wird, ob sie keine Verzweigungsinstruktion NBR, was der Fall ist, wenn diese Differenz bei gleichlangen Instruktionen 1 bzw. diese Differenz n ist, falls sich die Instruktionslängen um den Wert n unterscheiden, wobei bei einer Differenz ungleich 1 oder ungleich n eine Verzweigunginstruktion (BR) indiziert wird.

5. Einrichtung zur Erzeugung des dynamischen Instruktionsflußindikatormusters (D-IFI-PAT) nach Anspruch 1, bzw. 3, dadurch gekennzeichnet, daß ein dynamischer Instruktionsflußindikator (11; Fig. 11) vorgesehen ist, der an eine Instruktionsadressenleitung (9) und eine Taktleitung (10) des Prüflings (8) angeschlossen ist und ein erstes Register (13) und ein zweites in Serie geschaltetes Register (14) aufweist, die je Arbeitszyklus (z.B. CYi;, Fig. 2) derart von einem ersten (CL (10)) und zweiten Takt (CL (40)) steuerbar sind, das das erste Register die Adresse der jeweils nächsten Instruktion und das zweite Register die Adresse der jeweils zu untersuchenden Instruktion, gesteuert von dem ersten und zweiten Takt, übernimmt, wobei der erste Takt die Übernahme der Adresse vom ersten in das zweite Register und der zweite Takt, der gegenüber dem ersten verzögert ist, die Übernahme der jeweils nächsten Instruktionsadresse von der Instruktionsadressenleitung (9) steuert, daß ferner eine Schaltungsanordnung (15) an das erste und zweite Register angeschaltet ist, welche die Differenz der beiden anliegenden Adressen bildet und die, wenn die Differenz gleich 1 ist, bereinigt um einen Korrekturwert bei Instruktionen unterschiedlicher Länge, ein Differenzsignal (=1) erzeugt, das zu einem dritten Register (16), gesteuert von einem dritten Takt (CL (43)), der gegenüber dem zweiten Takt verzögert ist, übertragen wird, wobei das dritte Register ein Signal (NBR), als Bit 0 = 1 und ein Signal $\overline{BR}$, als Bit 1 = 0 des dynamischen Instruktionsflußindikatormusters erzeugt oder, wenn das Differenzsignal andere Werte ($\neq$1) darstellt, ein Signal $\overline{NBR}$ als Bit 0 = 0 und ein Signal (BR), als Bit 1 = 1 des dynamischen Instruktionsflußindikatormusters erzeugt, und daß schließlich ein viertes Register (17) vorgesehen ist, dem, gesteuert von dem ersten Takt, einen Arbeitszyklus später (z.B. Cyi+1) das Signal NBR bzw. $\overline{NBR}$ des dritten Registers zugeführt wird und dieses vierte Register bei anliegendem NBR-Signal ein Signal (SE), als Bit 2 = 1 und ein Signal $\overline{NSE}$, als Bit 3 = 0 des dynamischen Instruktionsflußindikatormusters und bei anliegendem $\overline{NBR}$-Signal, ein Signal $\overline{SE}$, als Bit 2 = 0 und ein Signal (NSE), als Bit 3 = 1 des dynamischen Instruktionsflußindikatormusters erzeugt.

6. Einrichtung nach Anspruch 5 zur Protokollierung der dynamischen Instruktionsflußindikatormuster, dadurch gekennzeichnet, daß an den dynamischen Instruktionsflußindikator (11; Fig. 11) die Protokolliereinrichtung (24) angeschlossen ist, die einen hinsichtlich seiner Kapazität an die Größe der zu messenden Programme angepaßten Kontrollspeicher (28) und ein Adressenregister (26) aufweist, welche letzeres an das zweite Register (14), das die Adresse der zu untersuchenden Instruktionen enthält, angeschlossen ist, und gesteuert von einem vierten Takt (CL (45), der gegenüber dem dritten Takt so angemessen verzögert ist, bis ein gültiges dynamisches Instruktionsflußindikatormuster im dynamischen Instruktionsflußindikatormuster im dynamischen Instruktionsflußindikator gebildet ist, die Adresse übernimmt, so daß das gültige dynamische Instruktionsflußindikatormuster von den Ausgängen des dritten (16) und vierten Register (17) zeitgerecht in den Protokollspeicher übernehmbar ist.

## Claims

1. Method of measuring the coverage (ratio between the number of functions executed and the total of the functions comprised in the program to be tested), with test programs stimulating the program functions, and the instruction addresses of the program to be tested (user or control program) being called up from the storage (main or control storage) for interpretation and execution in real time during a program flow, characterized in that still in real time a dynamic instruction flow indicator pattern (D-IFI-PAT) is generated for each instruction out of its address and the address of the preceding instruction, said pattern indicating whether its development in the program flow corresponded to the following:
   a) no branch instruction (NBR),
   b) branch instruction (BR),
   c) sequential instruction (SE),
   d) non-sequential instruction (NSE),
   that furthermore the dynamic instruction flow indicator patterns generated were filed in a logging device (24) under the respective address of the instruction from which they had been derived, for a future comparison, that furthermore, from the program lists, a static instruction flow indicator pattern (ST-IFI-PAT) is generated for each instruction out of its operational code, said pattern indicating for each instruction whether it is
   a1) no branch instruction (NBR)
   b1) a branch instruction (BR)
   c1) an instruction reached by an internal entry (ILBL)
   d1) an instruction reached by an external entry (ELBL),
   and that finally, by an instructive comparison of this static instruction flow indicator pattern with the dynamic instruction flow indicator pattern its coverage is determined over all instructions of the tested program.

2. Method as claimed in claim 1, characterized in that the programs are tested in modules or sectors, respectively.

3. Method as claimed in claim 1 and/or 2, characterized in that the instruction flow indicator patterns (ST-IFI-PAT, D-IFI-PAT) consist of 4-bit digits, with bit position 0 being associated to the NBR-bit, bit position 1 to the BR-bit, bit position 2 to the ILBL or the SE-bit, respectively, and bit position 3 to the ELBL or the NSE-bit, respectively.

4. Method as claimed in one or several of claims 1 to 3, characterized in that from the address of an instruction and the address of its preceding instruction it is determined by forming their difference whether it is no branch instruction NBR, which is the case if this difference is 1 with instructions of equal length, or n if the instruction lengths differ by the value of n, with a branch instruction BR being indicated if a difference does not equal 1 or not equal n.

5. Device for generating the dynamic instruction flow indicator pattern (D-IFI-PAT) in accordance with claim 1 or 3, respectively, characterized in that a dynamic instruction flow indicator (11; Fig. 11) is provided which is connected to an instruction address line (9) and a clock line (10) of the unit to be tested (8), and that it comprises a first register (13) and a second series-connected register (14) which are controllable per operating cycle (e.g. CYi; Fig. 2) in such a manner by a first (CL (10)) and second clock (CL (40)) that the first register takes over the address of the respective next instruction, and the second register the address of the respective instruction to be examined, controlled by the first and second clock, with the first clock controlling the taking-over of the address from the first into the second register, and the second clock which is delayed relative to the first one the taking-over of the respective next instruction address from the instruction address line (9), that furthermore a circuit arrangement (15) is connected to the first and second register which generates the difference between the two addresses applied and which, if the difference equals 1, generates a differential signal (= 1) corrected by a correction value in case of instructions of different length, said signal being transferred to a third register (16) controlled by a third clock (CL (43)) delayed relative to the first clock, with the third register generating a signal NBR as bit 0 = 1 and a signal $\overline{BR}$ as bit 1 = 0 of the dynamic instruction flow indicator pattern or, if the differential signal represents other values ($\neq$1) generating a signal $\overline{NBR}$ as bit 0 = 0 and a signal BR as bit 1 = 1 of the dynamic instruction flow indicator pattern, and that finally a fourth register (17) is provided to which controlled by the first clock and one operating cycle later (e.g. Cyi+1) the signal NBR

or $\overline{\text{NBR}}$ , respectively of the third register is applied, and that this fourth register, with an NBR-signal being applied generates a signal (SE) as bit 2 = 1 and a signal $\overline{\text{NSE}}$ as bit 3 = 0 of the dynamic instruction flow indicator pattern, and with an $\overline{\text{NBR}}$ -signal being applied a signal $\overline{\text{SE}}$ as bit 2 = 0 and a signal NSE as bit 3 = 1 of the dynamic instruction flow indicator pattern.

6. Device as claimed in claim 5 on the logging of the dynamic instruction flow indicator pattern, characterized in that connected to the dynamic instruction flow indicator (11; Fig. 11) the logging device (24) is connected which comprises a control storage (28) adapted in its capacity to the size of the programs to be measured, and an address register (26), the latter being connected to the second register (14) comprising the address of the instruction to be examined, and controlled by a fourth clock (CL (45)) which compared with the third clock is correspondingly delayed until a valid dynamic instruction flow indicator pattern in the dynamic instruction flow indicator has been formed and takes over the address so that the valid dynamic instruction flow indicator pattern can be taken over in time into the logging storage by the exits of the third (16) and fourth registers (17).

## Revendications

1. Procédé de mesure du degré de couverture (rapport du nombre des fonctions exécutées au nombre total des fonctions contenues dans le programme à tester), dans lequel des programmes d'essai stimulent les fonctions du programme, et les adresses d'instructions du programme à tester (programme d'application ou de commande), aux fins d'interprétation et d'exécution, sont appelées à partir de la mémoire (mémoire principale ou de commande) en temps réel pendant un déroulement du programme, caractérisé en ce qu'en outre en temps réel, pour chaque instruction, on produit à partir de son adresse et de l'adresse de l'instruction précédente, une configuration d'indicateur de flux d'instructions dynamique qui indique pour chaque instruction examinée si, à son parcours dans le déroulement du programme:

    a) il ne correspond pas d'instruction de branchement NBR,
    b) il correspond une instruction de branchement BR,
    c) il correspond une instruction séquentielle SE,
    d) il correspond une instruction non-séquentielle NSE,

en ce qu'en outre les configurations d'indicateurs de flux d'instructions dynamiques produites sont placées dans un dispositif d'analyse de parcours (24) chaque fois sous l'adresse de l'instruction de laquelle elles ont été tirées pour une comparaison ultérieure, en ce qu'en outre on produit à partir des listes de programme pour chaque instruction à partir de son code opération une configuration d'indicateur de flux d'instructions statique qui indique pour chaque instruction si

    a1) ce n'est pas une instruction de branchement,
    b1) c'est une instruction de branchement,
    c1) c'est une instruction qui est obtenue à partir d'un label interne,
    d1) c'est une instruction obtenue à partir d'un label externe,

et en ce qu'enfin, par une comparaison relative aux instructions de la configuration d'indicateur de flux d'instructions statique avec la configuration d'indicateur de flux d'instructions dynamique, sur toutes les instructions du programme testé, on détermine son degré de couverture.

2. Procédé selon la revendication 1, caractérisé en ce qu'on teste les programmes par modules ou segments.

3. Procédé selon la revendication 1 et/ou 2, caractérisé en ce que les configurations d'indicateur de flux d'instructions (ST-IFI-PAT, D-IFI-PAT) comprennent des chiffres de 4 bits, le bit de position 0 correspondant au bit NBR, le bit de position 1 au bit BR, le bit de position 2 au bit ILBL ou au bit SE et le bit de position 3 au bit ELBL ou NSE.

4. Procédé selon une ou plusieurs des revendications 1 à 3, caractérisé en ce qu'à partir de l'adresse d'une instruction et de l'adresse de l'instruction qui la précède, on détermine par soustraction si ce n'est pas une instruction de branchement, ce qui est le cas si cette différence est de 1 pour des instructions de même longueur ou si cette différence est de $\underline{n}$, si les longueurs des instructions diffèrent de la valeur $\underline{n}$, une instruction de branchement BR étant indiquée par une différence différente de 1 ou différente de $\underline{n}$.

5. Dispositif pour produire la configuration d'indicateur de flux d'instructions dynamique (D-IFI-PAT) selon la revendication 1 ou 3, caractérisé en ce qu'on prévoit un indicateur de flux d'instructions dynamique (11; figure 11) qui est raccordé à un conducteur d'adresses d'instructions (9) et à un conducteur de rythme (10) de l'appareil (8) à examiner et comporte un premier registre (13) et un second registre (14) montés en série, lesquels peuvent pour chaque cycle de fonctionnement (par exemple CYi; figure 2), être commandés par une première série (CL(10)) et une seconde série (CL(40)) d'impulsions d'horloge de telle façon que le premier registre prend en charge l'adresse de l'instruction chaque fois suivante et le seconde registre l'adresse de l'instruction à examiner chaque fois, sous la commande de la première série d'impulsions d'horloge et de la seconde, la première série commandant le transfert de l'adresse du premier dans le second registre et la seconde série d'impulsions d'horloge, qui est retardée par rapport à la première, le transfert de l'adresse d'instruction chaque fois suivante du conducteur d'adresses d'instructions (9), en ce qu'en outre un montage (15) est branché sur le premier et le second registres, lequel forme la différence des deux adresses appliquées et, lorsque la différence est égale à 1, corrigée d'une valeur corrective pour des instructions de longueur différente, produit un signal de différence (=1), qui est transmis à un troisième registre (16), sous la commande d'une troisième série d'impulsions d'horloge (CL(43)) qui est retardée par rapport à la seconde série, le troisième registre produisant un signal NBR, en tant que bit 0 = 1 et un signal $\overline{BR}$ , en tant que bit 1 = 0 de la configuration d'indicateur de flux d'instructions dynamique ou lorsque le signal de différence représente d'autres valeurs ($\neq$ 1), un signal $\overline{NBR}$ comme bit 0 = 0 et un signal BR comme bit 1 = 1 de la configuration d'indicateur de flux d'instructions dynamique, et en ce qu'enfin on prévoit un quatrième registre (17) auquel, sous la commande de la première série d'impulsions d'horloge, un cycle de fonctionnement plus tard (par exemple Cyi + 1), le signal NBR ou $\overline{NBR}$ du troisième registre est transmis et ce quatrième registre, en présence d'un signal NBR appliqué, produit un signal (SE) comme bit 2 = 1 et un signal $\overline{NSE}$, comme bit 3 = 0 de la configuration d'indicateur de flux d'instructions dynamique et, en présence d'un signal $\overline{NBR}$ appliqué, un signal $\overline{SE}$ comme bit 2 = 0 et un signal NSE, comme bit 3 = 1 de la configuration d'indicateur de flux d'instructions dynamique.

6. Dispositif selon la revendication 5 pour l'analyse de parcours de la configuration d'indicateur de flux d'instructions dynamique, caractérisé en ce qu'il est raccordé à l'indicateur de flux d'instructions dynamique (11 ; figure 11) le dispositif d'analyse de parcours (24) qui comporte une mémoire de contrôle (28) dont la capacité est adaptée à la taille des programmes à mesurer et un registre d'adresses (26), lequel est relié au second registre (14) qui contient l'adresse des instructions à examiner, et, sous la commande d'une quatrième série d'impulsions d'horloge (CL(45)) qui est retardée par rapport à la troisième série jusqu'à ce qu'une configuration d'indicateur de flux d'instructions dynamique valide soit formée dans la configuration d'indicateur de flux d'instructions dynamique se trouvant dans l'indicateur de flux d'instructions dynamique, prend en charge l'adresse, de telle sorte que la configuration d'indicateur de flux d'instructions dynamique valide peut être transférée des sorties du troisième registre (16) et du quatrième registre (17) au moment adéquat dans la mémoire de protocoles.

EP 0 228 480 B1

FIG. 1

FIG. 2

FIG. 5

| | | STAP | DAT D − IFI − PAT | | P1 + P2 |
| | | ST − IFI − PAT | P1 | P2 | (PAT P1 V PAT P2) |
| µ A | | BIT 0 1 2 3 | BIT 0 1 2 3 | BIT 0 1 2 3 | BIT 0 1 2 3 |
| X'0000' | A | B'1001' ≜ X'9' | B'1001' ≜ X'9' | B'1001' ≜ X'9' | B'1001' ≜ X'9' |
| X'0001' | N | B'1000' ≜ X'8' | B'1010' ≜ X'A' | B'1010' ≜ X'A' | B'1010' ≜ X'A' |
| X'0002' | ST | B'1000' ≜ X'8' | B'1010' ≜ X'A' | B'1010' ≜ X'A' | B'1010' ≜ X'A' |
| X'0003' | BC | B'1100' ≜ X'C' (BC) | B'1010' ≜ X'A' | B'0110' ≜ X'6' | B'1110' ≜ X'E' |
| X'0004' | S | B'1000' ≜ X'8' | B'1010' ≜ X'A' | B'0000' ≜ X'0' | B'1010' ≜ X'A' |
| X'0005' | BR | B'0110' ≜ X'6' | B'0110' ≜ X'6' | B'0101' ≜ X'5' | B'0111' ≜ X'7' |

NBR ILBL BR ELBL

NBR SE BR NSE

NBR SR BR NSE

NBR SE BR NSE

FIG. 5     FIG. 6     FIG. 7     FIG. 8     FIG. 9

FIG. 3

Ga:

FIG. 4

NSE

(BIT 3)

SE

(BIT 2)

4

5

μ A    3

μ I    2

7    6

(BIT 1)

(BIT 0)

BR

NBR

CS

## FIG. 10

ELBL

(BIT 3)

ILBC

(BIT 2)

37

38

μ A    3

u I    2

36    (BIT 1)

35

(BIT 0)

BR

NBR

BC – (BIT 1 = 1)

(BIT 0 = 1)

## FIG. 13

# FIG. 11

# FIG. 12